Europäisches Patentamt

(19) European Patent Office

Office européen des brevets

(11) Publication number: **0 094 203**
A2

# (12) EUROPEAN PATENT APPLICATION

(21) Application number: 83302526.5

(22) Date of filing: 05.05.83

(51) Int. Cl.³: **F 24 J 3/04,** F 28 D 7/10, C 01 B 3/00

(30) Priority: 12.05.82 US 377556

(43) Date of publication of application: 16.11.83
**Bulletin 83/46**

(84) Designated Contracting States: **BE CH DE FR GB LI NL
SE**

(71) Applicant: **MPD Technology Corporation, 681 Lawlins
Road, Wyckoff New Jersey 07481 (US)**

(72) Inventor: **Golben, Peter Mark, 239 Madison Avenue,
Wyckoff New Jersey 07481 (US)**

(74) Representative: **Lockwood, Barbara Ann et al, Thames
House (Fifth Floor) Millbank, London SW1P 4QF (GB)**

(54) **Thermally reversible heat exchange unit.**

(57) A thermally reversible heat exchange unit comprising an elongated outer jacket, at least one interior heat transfer surface and heat exchange fluid flowing therebetween in plug fashion.

## Thermally reversible heat exchange unit

The present invention relates to a heat exchange unit and more particularly to a thermally alternating heat exchange unit.

Thermally alternating heat exchange units are required for use in absorption-desorption systems in which absorption from a gas phase occurs at a heat sink temperature and desorption occurs at a higher heat source temperature. For efficiency in such systems, it is necessary that good heat transfer be accompanied by rapid thermal reversal. In particular with hydride systems such as refrigerators, heat pumps, compressors and hydrogen storage devices in which hydrogen is chemically combined with an intermetallic compound such as FeTi or an $AB_5$ compound where A is principally calcium or a rare earth metal and B is principally nickel or cobalt, there is a substantial need for rapidly reversible heat exchange units which can withdraw heat from and provide heat to hydride and hydridable alloy using heat sinks and heat sources of moderate temperature, e.g. 300°K for heat sink and 325°K to 380°K for heat source.

The present invention provides a novel thermally reversible heat exchange unit incorporating hydride containers which have good thermal conductivity and hydrogen accessibility.

According to the present invention there is provided a thermally alternating heat exchange unit comprising an elongated jacket and at least one elongated heat transfer surface located substantially parallel to the longitudinal axis thereof, and containing a heat exchange liquid to flow between the walls of the jacket and the heat transfer surface under a head which is operable to provide plug flow of the liquid through the jacket.

The jacket may be a straight tube or the tube may be coiled, meandered or otherwise shaped to fit in an available volume. Plug flow of liquid means flow in such a manner that when a liquid of one temperature is flowing through the jacket and then flow is exchanged by external valving to provide flow of a miscible liquid of different temperature, there is little or no mixing of the liquids in the jacket and when the plug of the first liquid exits the jacket the exit port will experience a sharp temperature demarcation rather than a gradual temperature change.

The invention will now be described by reference to the accompanying drawings in which:-

Figure 1 is a sketch of a heat exchange unit of the present invention;

Figure 2 is a cross-sectional view of the heat exchange unit of Figure 1 at the section II-II and

Figure 3 is a cross-sectional view of a hydride container as shown in Figure 2 along section III-III.

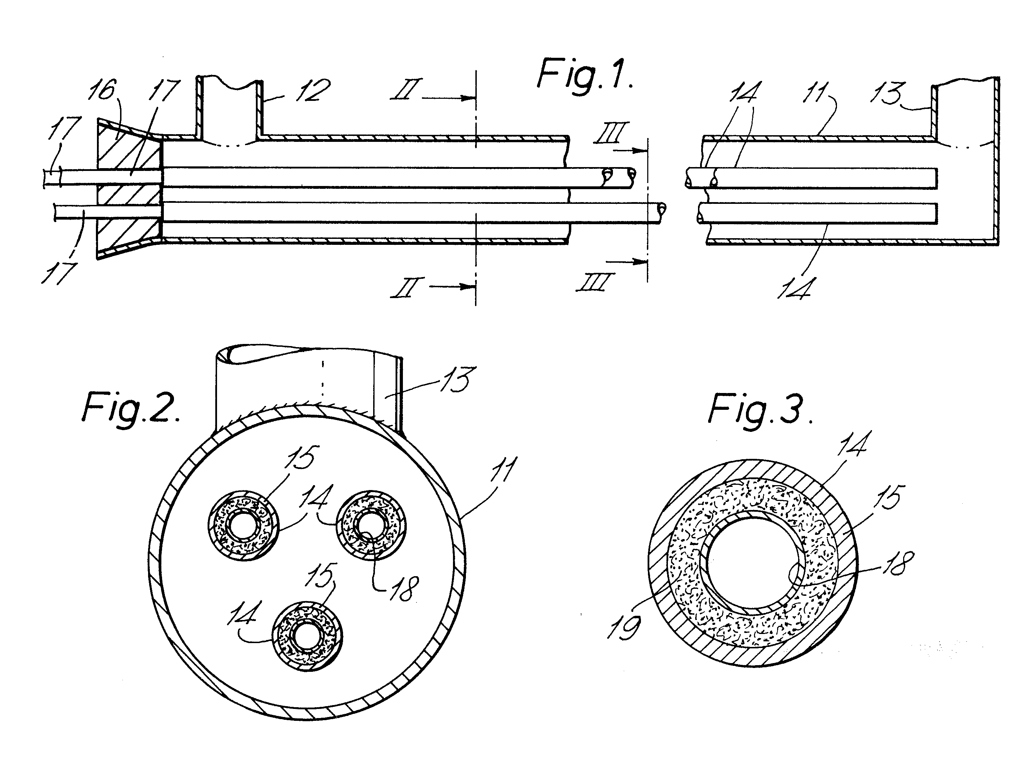

Figures 1 and 2 show an elongated jacket 11 which consists of a tube of metal or plastic capable of holding flowing heat transfer liquid, such as water, at moderate temperature, and provided with an inlet 12 and outlet 13. The jacket 11 contains one or more closed-ended hydride containers 14 (three are shown), the walls of which comprise heat transfer surfaces. The walls are typically of a hydrogen resistant metal such as copper or stainless steel. The containers 14 are enclosed in jacket 11 by any convenient means 16. They are preferably provided with inlet tubes 17 of reduced diameter to facilitate leak-proof sealing in jacket 11, as depicted in Figure 1. Figure 3 shows an advantageous design of hydride container 14 which shows metal wall 15, a co-axial coiled spring 18 defining a central hydrogen gas space and confining hydridable material 19 between the spring 18 and wall 15. This type of container is disclosed and claimed in

0094203

- 3 -

UK Patent Application 82-26540.

In a particular operation, the thermally reversible heat exchange unit of the present invention comprises a jacket about 300 cm long and about 2.9 cm in outside diameter. When fed with water at a rate of about 8 litres per minute, plug flow occurs and it takes about 7 to 8 seconds for water of one temperature to displace water of another temperature in jacket 11 without substantial mixing of the waters.

## Claims

1.      A thermally alternating heat exchange unit characterised in that it comprises an elongated jacket 11 and at least one elongated heat transfer surface 14 located substantially parallel to the longitudinal axis thereof, and containing, in use, a heat exchange liquid to flow between the wall of the jacket 11 and the heat transfer surface 14 under a head which is operable to provide plug flow of the liquid through the jacket 11.

2.      A heat exchange unit as claimed in claim 1 in which the heat transfer surface 14 is the exterior surface of a metal tube located within the jacket 11.

3.      A heat exchange unit as claimed in claim 1 or claim 2 in which the tube is a closed-ended hydride container 14 made of a hydrogen-resistant metal.

4.      A heat exchange unit as claimed in any preceding claim in which the hydride container 14 comprises a substantially coaxial spring 18 defining a central hydrogen gas space and confining hydridable material 19 between the spring 18 and wall 15 of the container 14.

in an available volume. Plug flow of liquid means flow in such a manner that when a liquid of one temperature is flowing through the jacket and then flow is exchanged by external valving to provide flow of a miscible liquid of different temperature, there is little or no mixing of the liquids in the jacket and when the plug of the first liquid exits the jacket the exit port will experience a sharp temperature demarcation rather than a gradual temperature change.

The invention will now be described by reference to the accompanying drawings in which:-

Figure 1 is a sketch of a heat exchange unit of the present invention;

Figure 2 is a cross-sectional view of the heat exchange unit of Figure 1 at the section II-II and

Figure 3 is a cross-sectional view of a hydride container as shown in Figure 1 along section III-III.

Figures 1 and 2 show an elongated jacket 11 which consists of a tube of metal or plastic capable of holding flowing heat transfer liquid, such as water, at moderate temperature, and provided with an inlet 12 and outlet 13. The jacket 11 contains one or more closed-ended hydride containers 14 (three are shown), the walls of which comprise heat transfer surfaces. The walls are typically of a hydrogen resistant metal such as copper or stainless steel. The containers 14 are enclosed in jacket 11 by any convenient means 16. They are preferably provided with inlet tubes 17 of reduced diameter to facilitate leak-proof sealing in jacket 11, as depicted in Figure 1. Figure 3 shows an advantageous design of hydride container 14 which shows metal wall 15, a co-axial coiled spring 18 defining a central hydrogen gas space and confining hydridable material 19 between the spring 18 and wall 15. This type of container is disclosed and claimed in

Fig.1.

Fig.2.

Fig.3.

1/1

0094203